# EUROPEAN PATENT APPLICATION

(11) **EP 1 826 229 A1**
(43) Date of publication of application: **29.08.2007**
(21) Application number: 06290320.8
(22) Date of filing: 27.02.2006
(51) Int. Cl.: C08G 69/02, C08G 69/26, C08L 77/06

(54) **Amorphous copolyamides comprising p-bis(aminocyclohexyl)methane and terephtalic acid**

(71) Applicant: Arkema France, 92800 Puteaux (FR)
(72) Inventor: Blondel, Philippe, Le Mont Joli F-27300 Bernay (FR); Montanari, Thibaut, Rue du Pré-Hardy F-27300 Menneval (FR)
(74) Representative: Delprat, Corinne

(57) **Abstract**

The present invention relates to amorphous transparent copolyamides of formula: PACM.T / D.X / X1.Y1 resulting from the condensation of PACM, terephtalic acid, a diamine D, a diacid X, a diamine X1 and a diacid Y1 in which :
PACM denotes the p-bis(aminocyclohexyl)methane,
T denotes terephtalic acid,
D denotes a diamine chosen from aromatic, arylaliphatic and cycloaliphatic diamines,
X denotes a diacid HOOC-(CH₂)ₙ-COOH having from 8 to 20 carbon atoms,
X1 denotes an aliphatic diamine,
Y1 denotes a diacid HOOC-(CH₂)ₙ-COOH having from 6 to 20 carbon atoms,
the mol proportion of PACM.T is such as (PACM.T)/(PACM.T+D.X) is above 0.5, and can be increased to 1,
the mol proportion of X1 is between 16% and 38%,
X1.Y1 can be replaced partly or totally by Z, a lactam or an alpha-omega aminocarboxylic acid, having from 9 to 20 carbon atoms, and in this case the mol proportion of Z is between 33% and 75%.

## Description

### Field of the invention

The present invention concerns amorphous transparent copolyamides comprising p-bis(aminocyclohexyl)methane and terephtalic acid. The p-bis(aminocyclohexyl)methane or 4,4'-methylenebis(cyclohexylamine) is often described under the name of PACM.

The present invention also relates to the objects obtained from this composition. Polyamides are polymers which are widely used for their numerous properties. Specifically, polyamides exhibit some or all of the properties listed below: transparency, impact, tensile and/or compressive strength, high resistance to external attacks, such as cold, heat, chemical agents, radiation, in particular UV radiation, and others. The arrival has consequently been seen of objects based on polyamides, such as, for example, spectacle frames, various housings, motor vehicle accessories, surgical materials, packaging or sporting goods.

### The prior art and technical problem

In US 6 277 911 transparent, colorless, amorphous copolyamides and their blends or alloys are provided wherein the copolyamides are made of:
(i) at least one alkyl-substituted cycloaliphatic diamine having from 14 to 22 carbon atoms; and
(ii) at least one unbranched aliphatic dicarboxylic acid having from 7 to 14 carbon atoms, together with at least one aromatic dicarboxylic acid wherein said at least one aromatic dicarboxylic acid is present in an amount of no more than 20 mol %;
wherein said copolyamide or blend or alloy optionally contains processing and/or usage dictated additives, and wherein said copolyamides have relative solution viscosity of more than 1.6 and wherein said further polyamides are selected from the group consisting of homopolyamides and transparent copolyamides. The invention is also directed to and molded articles made therefrom. In particular, the copolyamides, as well as blends and alloys, of at least one aliphatic homopolyamide or amorphous copolyamide with the copolyamides, are those in which preferably long-chain aliphatic monomer units are combined with cycloaliphatic monomer units having at least one cyclohexane ring. As a result of this combination, the copolyamides so produced exhibit extremely high alternating bending strength as well as high tenacity, high rigidity, high resistance to heat distortion under elevated temperatures, and good solvent resistance.

US 5 696 202 describes a transparent, colorless, amorphous polyamide, or blend or alloy thereof with at least one aliphatic homopolyamide, wherein the transparent polyamide has a relative solution viscosity higher than 1.7, and is made up substantially of at least one alkyl-substituted cycloaliphatic diamine having from 14 to 22 carbon atoms consisting essentially of bis-(3-methyl-4-aminocyclohexyl)alkane wherein the alkane has one to three C-atoms, and at least one unbranched aliphatic dicarboxylic acid having from 8 to 14 carbon atoms.

US 5 773 558 describes transparent colorless, amorphous polyamide or blends or alloys thereof with at least one homopolyamide, the transparent polyamide has a relative solution viscosity of higher than 1.5 characterized in that: the polyamide is made substantially of at least one unbranched aliphatic diamine, having from 8 to 14 carbon atoms and further of at least one cycloaliphatic dicarboxylic acid having 8 to 22 carbon atoms and having at least one cyclohexane ring, wherein said acid can be replaced by a maximum of 20 mol % of at least one aromatic dicarboxylic acid and wherein the polyamide or their blends or alloys optionally contain processing and/or usage dictated additives.

US 6 008 288 describes transparent colorless, amorphous polyamides made substantially from :
a) alkyl-substituted cycloaliphatic diamines, preferably those with from 14 to 22 carbon atoms, which are combined with long-chain unbranched aliphatic dicarboxylic acids that have from 7 to 36 atoms and preferably 8 to 14 carbon atoms, which preferred are replaced with small proportions of aromatic dicarboxylic acids, preferably a maximum of 20 mol % and especially preferably a maximum of 10 mol % thereof, or substantially made from :
b) long-chain unbranched aliphatic diamines, preferably those with from 8 to 14 carbon atoms,which can be replaced by a maximum of 90 mol.% of short chained branched or unbranched aliphatic diamines having from 4 to 6 carbon atomes like pentamethylenediamine or hexamethylenediamine, and cycloaliphatic dicarboxylic acids that have at least one cyclohexane ring. These acids are preferebly replaced with a maximum of 20 mol %, and most preferably with a maximum of 10 mol %, of at least one aromatic dicarboxylic acid.

EP 313 436 describes polyamides made from at least a lactame, terephtalic acid, optionally isophtalic acid and alkyl-substituted cycloaliphatic diamines. All examples are made with 2,2'-dimethyl-4,4'-methylenebis(cyclohexylamine) or bis(3-methyl-4-aminocyclohexyl)methane. This diamine is often described under the name of BMACM.

US 5 310 860 is similar to the previous one.

EP 550 308 describes polyamides made from at least a lactame, terephtalic acid, isophtalic acid and alkyl-substituted cycloaliphatic diamines. All examples are made with BMACM. These polyamides are further blended with an aliphatic polyamide.

EP 553 581 describes blends of two amorphous polyamides. These polyamides are made from at least a lactame, terephtalic acid, isophtalic acid and alkyl-substituted cycloaliphatic diamines. All examples are made with BMACM.

EP 628 602 describes blends of a semi crystalline polyamide and an amorphous polyamide. The amorphous polyamide contains no PACM.

US 5 700 900 provides a copolyamide composition and an article molded therefrom, wherein the copolyamide composition comprises:
at least one copolyamide which includes long-chain monomer building blocks and which is comprised of:
   from about 20 to about 96 parts by weight, in particular from about 30 to about 96 parts weight of at least one long-chain monomer which is suitable as a long-chain building block for a polyamide and which has from 9 to 12 carbon atoms; and
   from about 4 to about 80 parts by weight, in particular from about 4 to about 70 parts by weight of precursor monomers for semiaromatic polyamides, which precursor monomers comprise at least one diamine, H2N--R-NH2, and at least one aromatic dicarboxylic acid in an approximately equimolar
   ratio with one another,
wherein R is a radical selected from the group consisting of a straight-chain radical having 2 to 12 carbon atoms, a branched aliphatic radical having 2 to 12 carbon atoms, an araliphatic radical having 7 to 12 carbon atoms, and a cycloaliphatic radical having 6 to 42 carbon atoms.
Optionally, up to about 15 mole percent of the at least one aromatic dicarboxylic acid may be replaced by a long-chain aliphatic dicarboxylic acid having 9 to 36 carbon atoms. While replacement is optional, when replacement is selected, from about 0.0001 to about 15 mole percent of the at least one aromatic dicarboxylic acid can be replaced. Examples describe BMACM.T/ 12 and 6.T/ 12.

US 5 360 891 relates to a colorless and transparent, amorphously processable polyamide molding composition which has a good resistance to stress cracking and good impact strength and is resistant to alcohols, esters, ketones, fuels, and boiling water, comprising the reaction product of:
I. a linear aliphatic dicarboxylic acid;
II.a) 35-60 mol % of trans,trans-bis(4-aminocyclohexyl)-methane; and
II.b) 65-40 mol % of other aliphatic, cycloaliphatic, araliphatic or aromatic diamines as starting components, the molar ratio of components I and II varying in the range from 0.95 to 1.05:1, preferably 0.98 to 1.02:1.
It also relates to a process for the preparation of a colorless and transparent, amorphously processable polyamide molding composition which has a good resistance to stress cracking and good impact strength and is resistant to alcohols, esters, ketones, fuels and boiling water, comprising polycondensating
I a linear aliphatic dicarboxylic acid;
II.a) 35-60 mol % of trans,trans-bis(4-aminocyclohexyl)-methane; and
II.b) 65-40 mol % of other aliphatic, cycloaliphatic, araliphatic or aromatic diamines in the melt at a melt temperature of from 250.degree. to 320. degree. C., the molar ratio of components I and II varying in the range from 0.95 to 1.05:1, preferably 0.98 to 1.02:1.

Suitable acid components I are linear dicarboxylic acids having 6 to 20 carbon atoms, such as, for example, octanedioic acid, decanedioic acid, dodecanedioic acid and tridecanedioic aid. n- Decanedioic acid (n- sebacic acid) and n-dodecanedioic acid are particularly preferred. Only C10 and C12 diacids are cited in the examples.

US 2003 0235666 relates to transparent polyamide moulding materials which are characterized in that they have a melting enthalpy between 0 and 12 J/g and the polyamides are constituted of :
- 100 mole % of a diamine mixture having 10-70 mole % of PACM [bis-(4-amino-cyclohexyl)-methane] with less than 50 wt.-% of trans,trans-isomer and 90-30 mole-% of MACM [bis-(4-amino-3-methyl-cyclohexyl)-methane], wherein, optionally, 0-10 mole-% can be replaced by other aliphatic diamines having 6 to 12 C atoms, cycloaliphatic, alkyl-substituted cycloaliphatic, branched aliphatic diamines or multiamines having 3 to 12 amino groups or mixtures thereof, and
- 100 mole-% of long-chain aliphatic dicarboxylic acids having 8 to 14 C atoms or mixtures of these dicarboxylic acids, wherein 0-10 mole- % can be replaced by other aromatic or cycloaliphatic dicarboxylic acids having 8 to 16 C atoms, which are especially selected from the group consisting of isophthalic acid, terephthalic acid, naphthalenedicarboxylic acid, cyclohexanedicarboxylic acid or mixtures thereof, and
- wherein, optionally, 0-10 mole-% of the other long- chain aliphatic diamines and 0-10 mole-% of the other long-chain aliphatic dicarboxylic acids can be added as 0-20 mole-% of omega-aminocarboxylic acids having 6 to 12 C atoms or lactams having 6 to 12 C atoms.

EP 1 595 907 relates to a transparent amorphous polyamide which results from the condensation:
- of at least one diamine chosen from aromatic, arylaliphatic and cycloaliphatic diamines,
- of tetradecanedioic acid or of a mixture comprising at least 50 mol% of tetradecanedioic acid and at least one diacid chosen from aliphatic, aromatic and cycloaliphatic dicarboxylic acids.
The invention also relates to a composition comprising, by weight, 1 to 100% of the preceding polyamide and 99 to 0% of a semicrystalline polyamide.

All the existing amorphous transparent polyamides have advantages but also drawbacks. For example for the sub category of semi-aromatic transparent amorphous polyamide the advantages are the injectability and often the stress cracking resistance but drawbacks are UV resistance and impact resistance. For the category of cycloaliphatic amorphous transparent polyamide, the advantages and drawbacks are typically opposite, the UV and impact resistance is good but the injectability is not very good, and the stress cracking resistance is not outstanding. The object of the invention is to find an amorphous transparent polyamide without any significant drawback, and in consequence able to more versatile uses.

### Brief description of the invention

The present invention relates to amorphous transparent copolyamides of formula: PACM.T / D.X / X1.Y1 resulting from the condensation of PACM, terephtalic acid, a diamine D, a diacid X, a diamine X1 and a diacid Y1 in which :
PACM denotes the p-bis(aminocyclohexyl)methane,
T denotes terephtalic acid,
D denotes a diamine chosen from aromatic, arylaliphatic and cycloaliphatic diamines,
X denotes a diacid HOOC-(CH₂)ₙ-COOH having from 8 to 20 carbon atoms,
X1 denotes an aliphatic diamine,
Y1 denotes a diacid HOOC-(CH₂)ₙ-COOH having from 6 to 20 carbon atoms,
the mol proportion of PACM.T is such as (PACM.T)/(PACM.T+D.X) is above 0.5, and can be increased to 1,
the mol proportion of X1 is between 16% and 38%,
X1.Y1 can be replaced partly or totally by Z, a lactam or an alpha-omega aminocarboxylic acid, having from 9 to 20 carbon atoms, and in this case the mol proportion of Z is between 33% and 75%.

Examples of copolyamides according to the invention are PACM.T/PACM.10/6.10 ; PACM.T/PACM.10/6.14 ; PACM.T/PACM.14/6.14 ; PACM.T/6.18 ; PACM.T/12 ; PACM.T/BMACM.14/12 ; PACM.T/BMACM.14/6.14 ; PACM.T/IPD.14/6.14. In the previous formula IPD means isophorone diamine.

The invention also relates to a composition comprising, by weight, 1 to 100% of the preceding copolyamide and 99 to 0% of a polymer chosen among semicrystalline polyamides, impact modifiers (including copolymers having polyamide blocks and polyether blocks).

The invention also relates to the objects composed of the composition of the invention, such as panels, films, sheets, pipes, profiles or objects obtained by injection moulding.
The invention also relates to objects covered with a transparent protective layer composed of the composition of the invention.

### Detailed description of the invention

As regards the diamines D, they are aromatic, arylaliphatic or cycloaliphatic in nature and advantageously comprise from 6 to 36 carbon atoms. They can be used alone or as mixtures. A minority of moles of diamine can optionally be substituted by linear aliphatic diamines, such as, for example, hexamethylenediamine, nonanediamine, decanediamine or dodecanediamine, or branched aliphatic diamines, such as, for example, methylpentamethylenediamine. Among aromatic, arylaliphatic or cycloaliphatic diamines or their mixtures, arylaliphatic or cycloaliphatic diamines are preferred. Mention may be made, among arylaliphatic diamines, of, for example, meta-xylylenediamine.

Among arylaliphatic or cycloaliphatic diamines comprising from 6 to 36 carbon atoms or their mixtures, cycloaliphatic diamines are preferred. Non limiting examples of cycloaliphatic diamines and their processes of preparation are indicated in the publication "Cycloaliphatic Amines" (Encyclopaedia of Chemical Technology, Kirk-Othmer, 4th Edition (1992), pp. 386-405). These diamines often comprise several isomers because of the nature of the industrial manufacturing processes. Commercially available cycloaliphatic diamines often comprise one or two optionally substituted cycloaliphatic rings. Mention may be made, among cycloaliphatic diamines comprising a cycloaliphatic ring, of, for example, isophoronediamine (CAS [2855-13-2]), 1,4-cyclohexanediamine (CAS [3114-70-3]) or 1,3-diaminomethylcyclohexane (CAS [2579-20-6]).
Cycloaliphatic diamines comprising two cycloaliphatic rings are preferred in this application. These diamines correspond to the general formula (1) 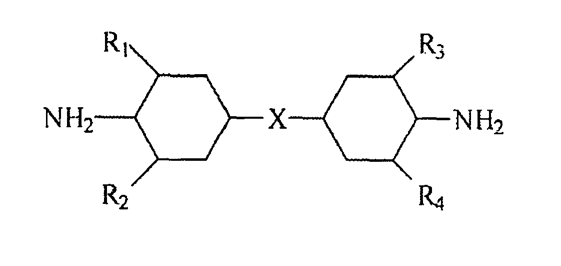 in which
R₁ to R₄ represent identical or different groups chosen from a hydrogen atom or alkyl groups of 1 to 6 carbon atoms and X represents either a single bond or a divalent group composed:
- of a linear or branched aliphatic chain of 1 to 10 carbon atoms,
- of a cycloaliphatic group of 6 to 12 carbon atoms,
- of a linear or branched aliphatic chain of 1 to 10 carbon atoms substituted by cycloaliphatic groups of 6 to 8 carbon atoms,
- of a group of 8-12 carbon atoms composed of a linear or branched dialkyl with a cyclohexyl or benzyl group.
PACM, PACP and BMACM have already been mentioned among cycloaliphatic diamines comprising at least two cycloaliphatic rings. Mention may also be made of the diamines bis(3,5-dialkyl-4-aminocyclohexyl)methane, -ethane, -propane or - butane. These diamines and their process of preparation are disclosed in Patent US 4 293 687.

**With regard to "X",** the diacid may be a straight-chain α,ω-diacid. It may be branched or a mixture of a linear (straight chain) diacid and of a branched diacid. Advantageously X contains from 10 to 14 carbon atoms and is linear.

**With regard to "X1.Y1",** the diamine X1 may be a straight-chain α,ω-diamine. It may be branched or a mixture of a linear (straight chain) diamine and of a branched diamine. the diacid Y1 may be a straight-chain α,ω-diacid. It may be branched or a mixture of a linear (straight chain) diacid and of a branched diacid. Advantageously X1.Y1 is such as:
either X1 is a diamine having 6 to 10 carbon atoms and Y1 is a diacid having 10 to 14 carbon atoms,
either X1 is a diamine having 6 carbon atoms and Y1 is a diacid having 15 to 20 carbon atoms.

According to another embodiment X1.Y1 is Z and results from the condensation of caprolactame or lauryllactame and preferably lauryllactame.

As regards the blends of the copolyamide of the invention with a semicrystalline polyamide, mention may be made, as example of semicrystalline polyamide, of polyamides based on hexamethylenediamine (PA 6-9, 6-10, 6-12, 6-14), on nonanediamine (PA 9-10, 9-12, 9-14), on decanediamine (PA 10-10, 10-12, 10-14), on dodecanediamine (PA 12-10, 12-12, 12-14), and PA 10, PA 11 and PA 12. Mention may also be made of copolyamides 11/12 having either more than 90% of 11 units or more than 90% of 12 units. These polyamides result from the condensation of 11-aminoundecanoic acid with lauryllactam (or C₁₂ α,ω-amino acid). The blend can be produced in the molten state in the usual devices, such as, for example, an extruder. A catalyst can be added. This can also be the remnant of the optional catalyst used for the preparation of the amorphous polyamide or for the preparation of the semicrystalline polyamide. This is advantageously an organic or inorganic catalyst and this is preferably phosphoric acid or hypophosphoric acid. The amount of catalyst can be up to 3000 ppm with respect to the weight of the amorphous polyamide and of the semicrystalline polyamide and advantageously between 50 and 1000 ppm. Such catalysts are disclosed in Patent EP 550 308.

In a specific embodiment of the invention should the blends of the copolyamide of the invention with a semicrystalline polyamide contain less than about 40% (by weight) of semicrystalline polyamide and consequently more than 60% of the copolyamide, said blends are amorphous transparent polyamide. Should the proportion of semicrystalline polyamide is above about 40% the blend is not so transparent and has a too low glass transition temperature. Preferably the semi-crystalline polymer should have in average, a similar concentration of amide group to obtain a sufficient miscibility at high temperature, and consequently to obtain a well transparent final blend. Works done by T.S. Ellis give explanation about that.

With regard to the blend with impact modifier, mention may be made, for example, of polyolefins, crosslinked polyolefins, EPR, EPDM, SBS and SEBS elastomers, it is preferable for these elastomers to be grafted in order to make it easier to compatibilize them with the polyamide. Mention may also be made of acrylic elastomers, for example those of the NBR, HNBR or X-NBR type.

As regards the preparation of the copolyamides of the invention, use may be made of any conventional process for the synthesis of polyamides and copolyamides by condensation of the corresponding monomers. The synthesis can be carried out in the presence of a catalyst. This is advantageously an organic or inorganic catalyst and this is preferably phosphoric acid or hypophosphoric acid. The amount of catalyst can be up to 3000 ppm with respect to the weight of the amorphous copolyamide and advantageously between 50 and 1000 ppm. The transparent amorphous copolyamides according to the invention and their blends or alloys with one or more other polyamides can also comprise additives. Mention may be made, as example of additives which can be used, of reinforcing or non-reinforcing fillers, heat or UV stabilizers, internal or external lubricants, plasticizers, flame retardants, pigments and dyes, conductive or static-dissipative fillers, impact modifiers or chain-termination agents.

The amorphous copolyamides according to the invention and their blends or alloys with one or more other polyamides can be processed by known technologies for the conversion of thermoplastics, such as, for example, injection moulding or coinjection moulding, the extrusion of sheets, films, panels, profiles, filaments, pipes or tubing, or the extrusion-blow moulding of flasks, bottles or tanks. The objects which can be produced according to these technologies are also a subject-matter of the invention.

### Examples

P is PACM20 (details in table 1). Compared to PACM48 this PACM is preferred because it never givers too micro-crystalline product, and in consequence it is more easy to polymerise and manufacture (lower temperature of polymerisation) and in consequence it is more easy to make composition with higher glass transition temperature Tg (Tg > 100°C). PACM20 is available from Air Product®.

**table 1**

| **Isomers : Weight proportion** | **PACM 20** |
|---|---|
| Trans trans | 17-24 |
| Cis trans | 47-49 |
| Trans trans | 28-35 |

B is BMACM (also called MACM)
P48 is PACM48 supplied by BASF under the name Dycicane.
IPD is IPD (isophorone diamine)
T is terephtalic acid
I is isophtalic acid
12 is lauryl-lactam
.10 is diacid with 10 carbon atoms
.14 is diacid with 14 carbon atoms
Formulation are expressed in mole, P.T/12_{1.6} means 1 mol of "P", 1 mol of ".14", 1.6 mol of "12"

Example 1 : P.T/12 (33% mol of 12)
In a pressurized reactor having a capacity of 80 I were placed 13.4 kg of lauric lactam, 7.135 kg of -4,4'-diaminodicyclohexyl methane (PACM20 of Air product), 5.7Kg of terephtalique acid, and 0.5 kg of water. The mixture thus formed is place under an inert atmosphere and is heated until the temperature reaches 270°C and 30 bars. After maintaining for 3 h, a pressure reducing operation is subsequently carried out for 2 h to return to atmospheric pressure. The polycondensation is continued at 295°C for approximately 2 h while flushing with nitrogen util desired viscosity of the polymer is achieved. The transparent granules were dried in vacuo at 90.degree. C. for 8 hours. The product has a inherent solution viscosity (0.5% in m-cresol) of 1.15 dl/g The glass transition is 114 degree C
Following example use similar process of manufacture.
Example 2 : P_{0.8}.T_{0.8}/ P_{0.2}.10_{0.2} / 12₂
Example 3 : P_{0.8}.T_{0.8}/ P_{0.2}.14_{0.2} / 12₂
Example 4 : P₁.T₁/12₃ (60% mol of 12)
Example 5 : P₁.T₁/12₂ (50% mol of 12)
Example 6 : P_{0.8}.T_{0.8}/ P_{0.4}-14_{0.4}/12_{1.6} (40% mol of 12)
Example 7 : P_{0.8}.T_{0.8}/ P_{0.2}.10_{0.2}/6.10
Example 8 : P_{0.8}.T_{0.8}/ P_{0.2}.10_{0.2} / 6.14
Example 9 : P_{0.8}.T_{0.8}/ P_{0.2}.14_{0.2} / 6.14
Example 10 : P.T/ 6.18
Example 11 : P₁.T₁/6_{0.5}.18_{0.5} (16% mol of 6)
Example 12 : P₁.T₁/6_{1.5}.18_{1.5} (30% mol of 6)
Example 13 : P_{0.8}.T_{0.8}/ B_{0.4}.14_{0.4}/12_{1.6}
Example 14 : P_{0.8}.T_{0.8}/ IPD_{0.4.}14_{0.4}/12_{1.6}
Example 15 : P_{0.8}.T_{0.8}/ B_{0.4}.14_{0.4}/6_{0.8}.14_{0.8}
Example 16 : P.T/6.14
Example 17 : P48.T/12₃

**Table 2**

| | | | | Desirable properties | | | | | |
|---|---|---|---|---|---|---|---|---|---|
| | monomers and composition | % mol | Tg °C | Injecta bility | Stress cracking resitance | Polymerisation easiness | Flexibility | UV resistance | Impact resist. |
| | | | | | | | | | |
| | | | | | | | **too rigid** | | |
| comparative 1 | B.T/8.1/12 | 0.7.0.7/0.3.0.3/1 | 170 | **good** | **85% fair** | **fair (305°C)** | **2000MPa** | **fair** | **poor** |
| | | | | | | | **too rigid** | | |
| comparative 2 | comparative 1 + 30%PA12 | | 110 | **good** | **100% very good** | **fair (305°C and more)** | **1750MPa** | **fair** | **fair** |
| | | | | | | | **too rigid** | | |
| comparative 3 | B.I/12 | 1.1/1 | 160 | **quite good** | **83% fair** | **good (290°C)** | **2000 MPa** | **fair** | **fair** |
| | | | | | | | **good** | | |
| comparative 4 | B.12/12 | 1.11 | 114 | **quite good** | **83% fair** | **good (280°C)** | **1380MPa** | **very good** | **good** |
| | | | | | | | **good** | | |
| comparative 5 | B.12 | 1.1 | 152 | **fair** | **85% fair** | **good (280°C)** | **1500MPa** | **very good** | **good** |
| | | | | | | | **good** | | |
| comparative 6 | P.I/12 | 1.1/2.4 | 103 | **good** | **85% fair** | **good (290°C)** | **1610MPa** | | |
| comparative 7 | P.T | | > 200 | | | **too difficult** | | | |
| | | | | | | | **good** | | |
| comparative 8 | B.T/12 | 1.1/2 | 120 | **good** | **85% fair** | **good (290°C)** | **1675MPa** | | |
| | | | | | | | **good** | | |
| example 5 | P.T/12 | 1.1/2 | 110 | **good** | **95% good** | **good (290°C)** | **1620MPa** | **quite good** | **good** |
| | | | | | | | **good** | | |
| example 2 | P.T/P.10/12 | 0.8.0.8/0.2.0.2/2 | 116 | **good** | **94% good** | **good (290°C)** | **1580MPa** | **good** | **good** |
| | | | | | | | **good** | | |
| example 13 | P.T/B.10/12 | 0.8.0.8/0.2.0.2/2 | 118 | **good** | **96% very good** | **good (290°C)** | **1660MPa** | **good** | **good** |
| | | | | | | | **good** | | |
| example 14 | P.T/IPD.10/12 | 0.8.0.8/0.2.0.2/2 | 114 | **good** | **92% good** | **good (290°C)** | **1600MPa** | **good** | **good** |

- Injectability is the aptitude to be processed by injection : short cycle time, no deformation, no bubble nor defects
- Stress cracking resistance correspond to to the maximum concentration of ethanol possible without any break, on injected 2mm thick dumbell bended at 180°, at 23°C
- Polymerisation easiness is the ability to be polymerise in not too diffcult conditions : temperature not above 300°C, cycle time not too long, viscosity not too high... (necessary polymerisation temperature is given)
- Flexibility correspond to flexural modulous ISO178, after 15 days conditionning at 50% RH, 23°C. A too rigid product is not well suited to make spectacle frames
- Impact resistance is a test made on an object which is a glass frame. On this glass frame a ball is projected at 150 feet/s.
- UV resistance is evaluated with QUV method, the criteria is yellowing compared to initial sample
   PA12 is polyamide 12, comparative 2 is a compound of PA12 and PA-B.T/B.1/12

## Claims

1. Copolyamides of formula: PACM.T / D.X / X1.Y1 resulting from the condensation of PACM, terephtalic acid, a diamine D, a diacid X, a diamine X1 and a diacid Y1 in which :
PACM denotes the p-bis(aminocyclohexyl)methane,
T denotes terephtalic acid,
D denotes a diamine chosen from aromatic, arylaliphatic and cycloaliphatic diamines,
X denotes a diacid HOOC-(CH₂)ₙ-COOH having from 8 to 20 carbon atoms,
X1 denotes an aliphatic diamine,
Y1 denotes a diacid HOOC-(CH₂)ₙ-COOH having from 6 to 20 carbon atoms,
the mol proportion of PACM.T is such as (PACM.T)/(PACM.T+D.X) is above 0.5, and can be increased to 1,
the mol proportion of X1 is between 16% and 38%,
X1.Y1 can be replaced partly or totally by Z, a lactam or an alpha-omega aminocarboxylic acid, having from 9 to 20 carbon atoms, and in this case the mol proportion of Z is between 33% and 75%.

2. Copolyamides according to claim 1 in which D is PACM.

3. Copolyamides according to claim 2 in which D is PACM20.

4. Copolyamides according to claim 1 in which D is BMACM.

5. Copolyamides according to any one of the preceding claims in which X is a diacid having from 10 to 14 carbon atoms.

6. Copolyamides according to any one of the preceding claims in which X1.Y1 is replaced by lauryllactame.

7. Copolyamides according to any one of the preceding claims in which X1 is a diamine having 6 to 10 carbon atoms and Y1 is a diacid having 10 to 14 carbon atoms.

8. Copolyamides according to any one of claims 1 to 6 in which X1 is a diamine having 6 carbon atoms and Y1 is a diacid having 15 to 20 carbon atoms.

9. Composition comprising, by weight, 60 to 100% of the amorphous copolyamide of any one of the preceding claims and 40 to 0% of a polymer chosen among the semicrystalline polyamides and impact modifiers.

10. Composition according to any one of the preceding claims comprising additives chosen from reinforcing or non-reinforcing fillers, heat or UV stabilizers, internal or external lubricants, plasticizers, flame retardants, pigments and dyes, conductive or static-dissipative fillers, or chain-termination agents.

11. Composition according to any one of the preceding claims, comprising a catalyst.

12. Objects composed of the composition of any one of the preceding claims, such as panels, films, sheets, pipes, profiles or objects obtained by injection moulding.

13. Objects covered with a transparent protective layer composed of the composition of any one of Claims 1 to 10.

14. Process for the preparation of the amorphous copolyamides of any one of Claims 1 to 8 by condensation of the monomers in the presence of a catalyst.

15. Process for the preparation of the composition of Claim 9 by blending the constituents in the molten state in the presence of a catalyst.
